# EUROPEAN PATENT APPLICATION

(11) **EP 4 425 401 A1**
(43) Date of publication of application: **04.09.2024**
(21) Application number: 24151642.6
(22) Date of filing: 12.01.2024
(51) Int. Cl.: G06Q 10/083

(54) **SYSTEMS AND METHODS TO IDENTIFY CARGO**

(30) Priority: 01.03.2023 US 202318176693
(71) Applicant: The Boeing Company, Arlington, VA 22202 (US)
(72) Inventor: CALLAHAN, Kevin S., Arlington, 22202 (US)
(74) Representative: Boult Wade Tennant LLP

(57) **Abstract**

A system to identify cargo. The system includes sensors that detect different aspects of the cargo. A computing device receives signals from the sensors indicative of the sensed aspects. The computing device determines an initial identity of the cargo based on the signals from the sensors. When the initial identities are consistent between the different sensors, the computing device identifies the cargo as the initial identify. When the initial identities are inconsistent, the computing device identifies the cargo in a different manner.

## Description

### TECHNOLOGICAL FIELD

The present disclosure relates generally to the field of cargo identification and, more specifically, to identifying cargo based on inputs from multiple different sensors.

### BACKGROUND

Packaging and moving cargo are fundamental aspects of today's world. The cargo can include a wide variety of goods and include a wide variety of packaging. Various methods have been developed to identify cargo. Some examples include vision systems that capture images of the cargo which are then analyzed to identify the cargo. Another example includes a radio-frequency identification (RFID) tag that is placed on the cargo. Information from the RFID tag is read to identify the cargo. Another example includes an identification code, such as a quick response (QR) code, bar code, or shipping label that can be read from the cargo and used for the identification.

An issue with current methods is that each of the various identification methods have drawbacks that may prevent accurate identification. Vision systems can be inaccurate, especially when the images of the cargo are not clear, such as when the cargo is obscured by other items. RFID tags can be broken during shipping and prevent use. Identification codes can be damaged during cargo handling and prevent the identification.

Some systems include a manually identification in which one or more persons identify the cargo. The identification can be based on some type of label on the cargo itself and/or based on a shipping manifest. The identification is then manually input into a computer system. Manual identification is a tedious process that is often time-consuming and not practical for systems that have tight timing deadlines. Further, manual systems also have inaccuracies caused by the difficulty with the persons involved properly identifying the cargo and then accurately inputting the identification into the computer system.

Systems and method are needed to provide for accurate identification of the cargo, particularly during movement of the cargo.

### SUMMARY

There is described herein a system to identify cargo. The system comprises one or more sensors configured to sense different aspects of the cargo and to transmit signals corresponding to the aspect. A computing device receives the signals from the one or more sensors. The computing device is configured to: determine initial identifications of the cargo based on the aspects that are sensed by the one or more sensors; when the initial identifications match, determine that a final identification of the cargo is equal to the initial identifications; and when the initial identifications do not match, determine the final identification based on a hierarchy of the initial identifications.

The computing device may be further configured to pair an image of the cargo with the final identification. The image of the cargo may be one or more 3D scans of the cargo.

The computing device may be further configured to determine a confidence value of the final identification of the cargo and pair the confidence value with the final identification. The computing device may be further configured to determine the confidence value based on a first one of the initial identifications of the cargo and determine that the first one of the initial identifications matches a second one of the initial identifications and increase the confidence value. The computing device may be further configured to determine that the first one of the initial identifications of the cargo 100 is different than a third one of the initial identifications and decrease the confidence value.

One of the sensors may comprise a camera and the aspect is a storage position of the cargo. One of the sensors may comprise a RFID reader and the aspect is a predetermined identification that is stored in an RFID tag that is mounted on the cargo. One of the sensors 40 may comprise an optical reader and the aspect is an optical code that is on the cargo. The sensors and the computing device may be mounted on a vehicle.

The computing device may be configured to: determine a storage position of the cargo based on an image of the cargo; determine a description for the storage position from a loading instructions report; and determine the identification of the cargo as the description. The computing device may be configured to: determine a first identification of the cargo based on an image of the cargo captured by a camera; determine a second identification of the cargo based on an optical code on the cargo; and determine that the first identification and the second identification match and that the final identification is the first identification and the second identification. The computing device may be further configured to: determine a position of cargo within an alignment area; determine a lane in which the cargo is moved based on the position within the alignment area; and determine a storage position based on the lane.

There is described herein a system to identify cargo. The system comprises a first sensor configured to sense a first aspect of the cargo and a second sensor configured to sense a different second aspect of the cargo. A computing device is configured to: determine a first initial identification of the cargo based on signals from the first sensor; determine a second initial identification of the cargo based on signals from the second sensor; identify the cargo in a first manner when the first initial identification matches the second initial identification; and identify the cargo in a second manner when the first initial identification is different than the second initial identification.

The computing device may be further configured to pair an image of the cargo with a final identification. The first manner may comprise determining a final identification of the cargo as the first initial identification. The first sensor, the second sensor, and the computing device may be mounted on an aircraft.

There is described herein a method of identifying cargo. The method comprises: determining initial identifications of the cargo based on different aspects that are sensed by one or more sensors; comparing the initial identifications; determining that a final identification of the cargo is the same as the initial identifications when the initial identifications match; and determining a confidence value of the final identification.

The method may further comprise capturing an image of the cargo and pairing the image with the final identification. Determining the confidence value may comprise determining a baseline value based on first one of the initial identifications and increasing the baseline value based on a second one of the initial identifications matching the first one of the initial identifications.

The features, functions and advantages that have been discussed can be achieved independently in various examples or may be combined in yet other examples, further details of which can be seen with reference to the following description and the drawings.

### BRIEF DESCRIPTION OF THE DRAWINGS

Figure 1 is a schematic diagram of a system for identifying cargo.
Figure 2 is a perspective view of cargo that includes a pallet base with stacked packages that are held with netting.
Figure 3 is a schematic diagram of a vehicle equipped with a system configured to identify cargo that is being loaded and unloaded.
Figure 4 is a section view of the fuselage of the aircraft cut along line IV-IV of Figure 3.
Figure 5 is a schematic diagram of an interior space of a vehicle configured to store the cargo during transport.
Figure 6 is a schematic diagram of an identification system that includes sensors configured to detect cargo and a computing device that receives signals from the sensors.
Figure 7 is a flowchart diagram of a method of identifying cargo.
Figure 8 is a flowchart diagram of a method of pairing a captured image of the cargo with a identification.
Figure 9 is a flowchart diagram of a method of determining placement of the cargo.
Figure 10 is a flowchart diagram of a method of determining an identification of cargo based on identifications of one or more packages in the cargo.
Figure 11 is a flowchart diagram of a method of determining a confidence value of an identification of cargo.
Figure 12 is a schematic diagram of a computing device.

### DETAILED DESCRIPTION

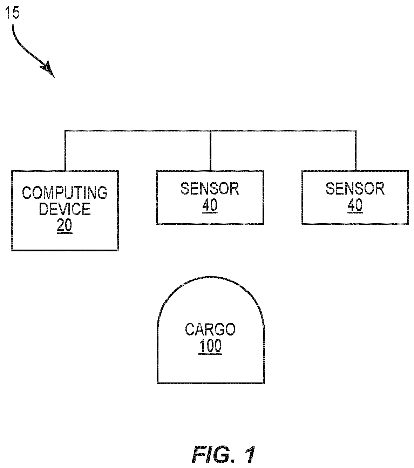

Figure 1 schematically illustrates a system 15 for identifying cargo 100. Sensors 40 are positioned to detect cargo 100. Each of the sensors 40 is configured to detect a different aspect of the cargo 100, such as but not limited to position, RFID, and visual identification code. A computing device 20 receives signals from the sensors 40 indicative of the sensed aspect. The computing device 20 determines an initial identity of the cargo 100 based on the signals from the sensor 40. When the initial identities are consistent between the different sensors 40, the computing device 20 identifies the cargo as the initial identify. When the initial identities are inconsistent, the computing device 20 identifies the cargo in a different manner. In some examples, the computing device 20 identifies the cargo based on a hierarchy of the different aspects that are sensed by the sensors 40.

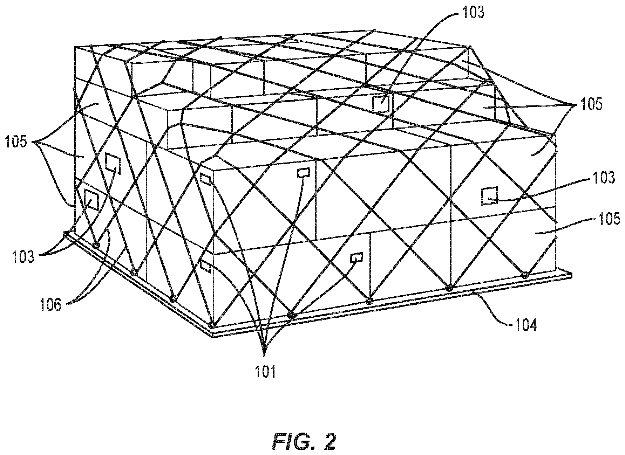

The cargo 100 can include a wide variety of items that can be stored in a wide variety of packaging. Figure 2 includes an example of cargo 100 that includes a pallet base 104 that supports individual packages 105. A protective material (not illustrated) such as plastic sheeting is wrapped around the packages 105 for protection. Netting 106 or other like covering material can extend over the packages 105 to attach them to the pallet base 104. The packages 105 may be stacked on the pallet base 104 into a shape that conforms to the shape and/or size of the storage location.

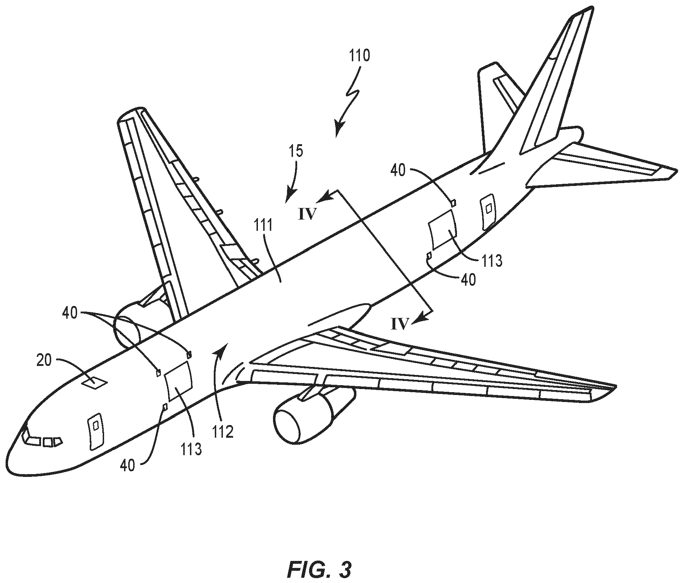

The system 15 can be used in a variety of different contexts. One context includes use for loading and/or unloading a vehicle 110. The system 15 can be integrated into the vehicle 110 or can be positioned in proximity to the vehicle 110 to monitor cargo 100 moving into and out of the vehicle 110. Figure 3 illustrates a specific example in which the vehicle 110 is an aircraft. The vehicle 110 includes a fuselage 111 with an interior space 112 configured to hold the cargo 100. One or more doors 113 provide for loading and unloading the cargo relative to the interior space 112. Sensors 40 are positioned on the vehicle 110 to capture images of the cargo 100 as it is being moved through a door 113. The sensors 40 are mounted to the vehicle 110 at various locations, including on one or more of the doors 113, on the fuselage 111, and within the interior space 112. The number of sensors 40 that sense the cargo 100 can vary.

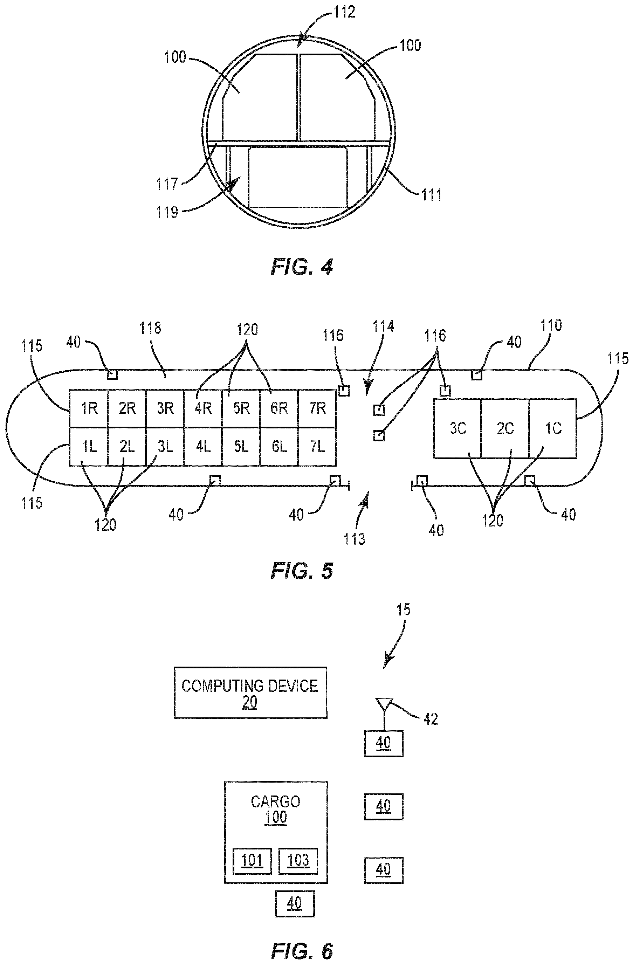

Figure 4 illustrates the interior space 112 within the fuselage 111. The interior space 112 includes a floor 117 that divides the interior space 112 into a main deck 118 above the floor 117 and a lower lobe 119 below the floor 117. The cargo 100 is sized to conform to the shape of the interior space 112. In some examples as illustrated in Figure 4, cargo 100 that includes a pallet base 104 and packages 105 are loaded in the main deck 118. Various other cargo is loaded in the lower lobe 119. In other examples, cargo 100 that includes a pallet base 104 and packages 105 is loaded in the lower lobe 119.

Figure 5 illustrates the interior space 112 of a main deck 118 of an aircraft. An alignment area 114 is positioned adjacent to the door 113. The cargo 100 is moved through the door 113 and into the alignment area 114 where it is aligned along one of the lanes 115 that extend along the interior space 112. The cargo 100 is then moved down the applicable lane 115 for positioning at one of the storage positions 120 for transport.

As illustrated in Figure 5, lanes 115 can be arranged in front of the alignment area 114 (fore lanes 115) and behind the alignment area 114 (aft lanes 115). In one example, the aircraft includes six lanes 115 that can be arranged in various configurations. The lanes 115 can be arranged in pairs with a right lane and a left lane 115. The lanes 115 can also be arranged with a single central lane 115. Figure 5 includes a configuration in which a fore section of the main deck 118 includes paired left and right lanes and the aft section includes a single central lane 115.

Each lane 115 includes storage positions 120 where the cargo 100 is stored during transport. Using Figure 5 as an example, the fore section includes two pairs of lanes 115 with storage positions 1R-7R along the right lane 115 and storage positions 1L-7L along the left lane 115. The aft section includes a single lane 115 with storage positions 1C-3C. The number and size of the storage positions 120 along the lanes 115 can vary.

In some examples, the cargo 100 is positioned within the interior space 112 according to a loading instruction report. The loading instruction report includes the storage position 120 for each piece of cargo 100. The loading instruction report ensures that the weight of the cargo 100 is distributed about the interior space 112 to provide for a safe flight. The report can also facilitate access to the cargo 100 for loading and/or unloading. For example, cargo 100 that is to be removed after transport to an intermediate location is placed closer to the end of the of lane 115 than cargo 100 that is to remain on the vehicle 110 until reaching its final destination.

The computing device 20 stores the loading instruction report and/or otherwise can access the report. The loading instruction report includes the identification of the cargo 100 that includes but is not limited to a description of the packages 105, identification number, weight, dimensions, owner name, owner address, origination point, destination point, destination address, pallet base identification, and identification of the packages 105. The loading instructions report also includes the storage position 120 within the interior space 112 where the cargo 100 is to be stored during transport.

The sensing system 15 is configured to sense and identify the cargo 100. In some examples, the cargo identification is based on identifying the pallet base 104. The one or more sensors 40 identify the pallet base 104.

In some examples, one or more sensors 40 are cameras that capture one or more images of the cargo 100. The cameras include a lens to focus the light and are configured to have one or more shutter speeds. Additionally or alternatively, the cameras include a polarizer to mitigate glare from a bright light source (e.g., sunlight/headlights). In some examples, the cameras 70 are passive cameras that do not include active energy such as lasers. The passive cameras make it more suitable for deployment and operation at airports that have restrictive requirements. The cameras can capture single images and/or video that includes multiple images.

In some examples, the cameras include a fixed field of view. This provides for sequences of timed images that include the cargo 100 moving across the field of view. This provides for capturing the cargo 100 from different perspectives and provides for determining a direction of movement of the cargo 100.

One manner in which the sensing system 15 identifies the cargo 100 is based on the storage position 120 within the interior space 112. Cameras are positioned at one or more locations to determine where the cargo 100 is positioned. Positions for the cameras include one or more of at the door 113, within the alignment area 114, and along lanes 115. In some examples, including the example as illustrated in Figure 5, a camera detects the position of the cargo 100 within the alignment area 114 including the alignment with one of the lanes 115. In some examples, the computing device 20 determines that cargo 100 will be moved down a lane 115 when placed in the alignment area 114 at the top of the lane 115. Additionally or alternatively, the lane 115 is determined by computing device 20 after detecting the cargo 100 moving down the particular lane 115. The movement is determined using a fixed field of vision camera that captures images over a period of time. For example, one or more sensors 40 detect that cargo 100 is initially aligned with a lane and then begins to move down the lane.

In some examples, movement sensors 116 are positioned along the floor of the interior space 112 to facilitate movement of the cargo 100. In some examples, movement sensors 116 detect rotation of rollers that are mounted on the floor and facilitate movement of the cargo. In other examples, movement sensors 116 include placement sensors that determine the specific position of the cargo 100. In one specific example, the placement sensors emit light beams that are broken by the cargo 100 as they move at particular locations within the interior space 112. The movement sensors 116 provide for the computing device 20 to determine the specific position of the cargo 100 along a lane 115, such as when the storage position 120 is distanced away from a lane end or other cargo 100.

The computing device 20 determines that the cargo 100 moves into the lane 115 to a storage position 120. In some examples, the computing device 20 assumes that the cargo 100 will be moved down the lane 115 until it reaches the end of the lane 115 or is positioned against other cargo 100 already loaded into the lane 115. In some examples, the computing device 20 relies on images from the one or more sensors indicating the storage position 120.

The computing device 20 uses the storage position 120 with the loading instruction report to identify the cargo 100. The computing device 20 determines the storage position 120 from the one or more sensors 40 and the identification for that position from the loading instruction report. For example, the computing device 20 determines the cargo 100 is positioned in the fore section of the interior space within lane 2, space 5R. The computing device 20 then determines that the loading instruction report has a pallet of shoes from XYZ, Inc. at this location.

In some examples, the identification system 15 identifies the cargo 100 through radio frequency identification (RFID). As schematically illustrated in Figure 6, the sensor 40 is an RFID reader that interacts with an RFID tag 101 that is attached to the pallet base 104 of the cargo 100. The sensor 40 includes one or more antennas 42 for transmitting and/or receiving signals. During use, the RFID reader transmits a signal (e.g., activation signal) that is generally at a specific frequency that is within a range that will cause the RFID tag 101 to resonate. The signal may also be transmitted at a specific power. The RFID tag 101 receives the signal and resonates and transmit a signal that can is received by the antenna 42. The signal may be an amplitude shift keying (ASK) modulated signal, a phase shift keying (PSK) modulated signal, or other type of modulated signal. The signal indicates one or more aspects of the cargo 100 to provide for identification. Examples of aspects include but are not limited to a serial number, shipping number, name of the goods, owner name, destination, and address.

In some examples, the RFID tag 101 is active and includes a power source to transmit the signals. The RFID tag 101 transmits the signals in response to receiving a transmission from the RFID reader and/or can transmit signals are various times.

In some examples, the sensor 40 is a reader configured to detect an optical code 103 on the pallet base 104 of the cargo 100. The optical code 103 can include various formats, including but not limited to a QR code, a bar code, and one or more alphanumeric characters (e.g., letters and numbers that form a serial number). The optical code 103 is configured to include one or more aspects about the cargo 100 that is used to determine the identification. The reader can include various formats, including but not limited to a camera and a scanner. In some examples, the reader is the same camera used to capture images of the cargo 100 as described above.

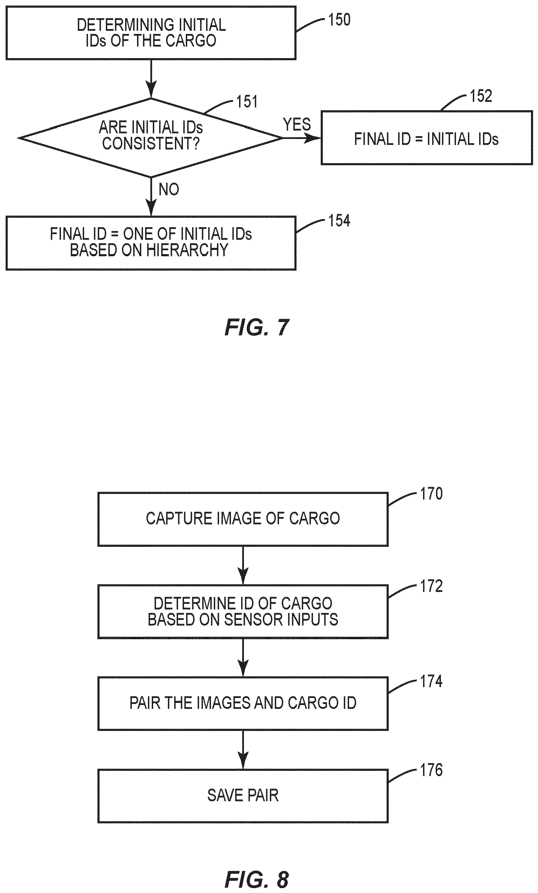

Figure 7 illustrates a method performed to identify the cargo 100. The method includes determining initial identifications of the cargo 100 based on different aspects that are sensed by one or more sensors 40 (block 150). The computing device 20 compares the initial identifications (block 151). The final identification is the same as the initial identifications when the initial identifications are consistent (block 152). The final identification is one of the initial indications with the highest hierarchy when the initial identifications are inconsistent (block 154).

In some examples, the hierarchy includes whether there is a match from two or more of the different sensors 40. The matching identifications are determined to be the correct identification of the cargo 100. For example, readings from a first sensor 40 result in the identification being a first pallet base 104a. Readings from each of a second sensor 40 and a third sensor 40 result in the identification of the cargo as a second pallet base 104b. The hierarchy results in the final determination being the matching identification from the two different sensors 40 (in this example, the identification is the second pallet base 104b as determined through the readings from the second and third sensors 40).

Additionally or alternatively, the hierarchy is based on the particular type of sensors 40 and/or data that is captured by the sensor 40. This hierarchy is based on the testing results that show identification through particular sensors to be more accurate than others. In some examples, the hierarchy includes an upper level of identification through an optical code 103, a second level of identification through an RFID tag 101, and then followed by a third level of identification through the storage position and corresponding look-up of the loading instruction report and corresponding identification.

In some examples, the system 15 senses three different aspects including an RFID, a storage position 120 within a vehicle 110, and an optical code 103. In this and certain other examples, the computing device 20 determines a different identification for each of the three sensed aspects. Because the inconsistencies between three identifications, the computing device 20 determines the final identification based on a hierarchy of aspects. In this and certain other examples, the computing device 20 identifies the cargo 100 based on the optical code 103 because of the hierarchy.

In other examples, the system 15 senses three different aspects including an RFID, a placement of the cargo 100 within a vehicle 110, and an optical code 103. The computing device 20 determines the same identification based on two of the sensor inputs and a different identification based on a third one of the sensor inputs. In some examples, the hierarchy results in the final identification being the identification from the two sensors that result in the same outcome.

The system 15 is also configured to save an image of the cargo 100 with the determined identification. This pairing of the image with the identified cargo 100 provides for various advantages including but not limited to analyzing the cargo 100 (e.g., how efficiently are the packages 105 positioned on the pallet base 104) and locating the cargo 100 during transport. In some examples, the pairing saves the image of the cargo 100 with the loading instruction report.

Figure 8 includes one example of identifying and pairing the information. An image of the cargo 100 is captured by one or more sensors 40 (block 170). In some examples, this includes capturing an image of the cargo 100 while it is being loaded onto the vehicle 110. Other examples include the one or more images being captured at different times during the loading process. The cargo 100 is identified based on one or more inputs from one or more sensors 40 (block 172). Once the cargo 100 is identified, the one or more images of the cargo 100 are paired with the identification (block 174). This pairing is then saved for subsequent use (block 176).

Some examples of the pairing method include identifying the cargo 100 based on a RFID tag 101 attached to the pallet base 104. The one or more images that are captured of the cargo 100 are then paired with the identified cargo 100. This paired information is stored such as at the computing device 20 or other location. In some examples, the image that is saved shows the cargo 100 at the storage position 120 within the vehicle 110 and is saved with the loading instruction report. This information can then be used later in the event there is an issue with the cargo 100.

Various types of captured images can be paired with the identified cargo 100. In some examples, the images are individual photos or videos of the cargo 100. The images are captured by one or more different sensors 40. In other examples, the captured images are 3D scans of the cargo 100 using various technologies.

The system 15 can verify that the cargo 100 has been moved to the correct storage position 120 within the vehicle 110. The verification process includes identifying the cargo 100 using an identification based on the storage position 120 in combination with one or more additional identifications through one or more other sensors 40. In some examples, the verification process is used to confirm that cargo 100 has been loaded onto a vehicle 110 (e.g., aircraft) according to a loading instruction report.

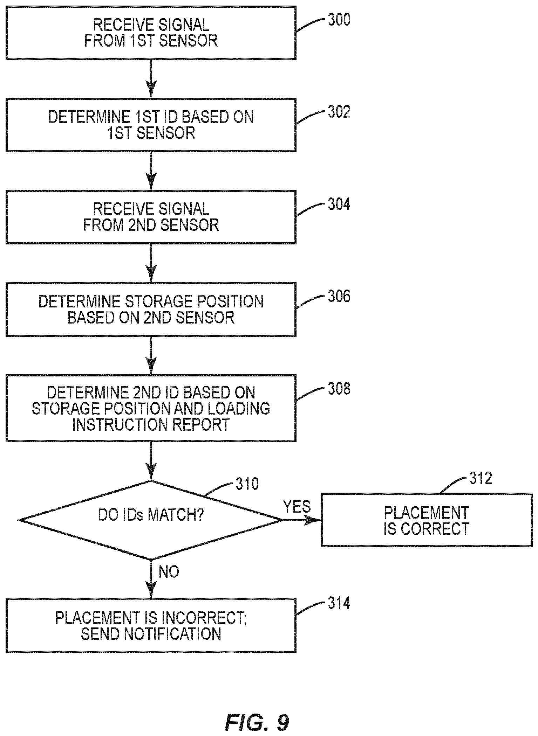

Figure 9 illustrates a verification process that includes receiving signals from a first sensor (block 300) that detects the cargo 100 and determining a first identification of the cargo 100 (block 302). This first sensor 40 does not rely on the storage position identification, but rather from a different type of identification such as but not limited to an optical code 103 or an RFID tag 101 that is mounted on the pallet base 104.

The process also includes receiving a signal from a second sensor 40 (block 304) and determining the storage position 120 of the cargo 100 (block 306). For example, the computing device 20 receives a signal from a camera and then determines a storage position 120 of the cargo 100 based on the detected location of the cargo 100. The computing device 20 then determines the identification of the cargo 100 based on the loading instruction report (block 308). This includes looking up the identification from the expected cargo 100 that is to be positioned at the determined storage position 120.

The computing device 20 then compares the two identifications (block 310). When the identifications match, the computing device 20 determines that the cargo 100 has been located at the correct storage position 120 (block 312). When the identifications do not match, the computing device 20 determines that there is an issue because the cargo 100 has not been located at the correct storage position 120 and in response sends a notification (block 314).

The notifications indicating that the storage position of the cargo 100 does not match the loading instruction report can have various formats and can be sent at various times. Notifications can be sent to one or more of the persons responsible for the loading process, the airline, and the flight crew operating the vehicle 110. Additionally or alternatively, an indicator such as a light or siren can be activated within the environment of the vehicle 110 indicating to those loading that there is a discrepancy.

In some examples, the computing device 20 sends a notification at the time the inconsistency is detected. For example, once cargo 100 is positioned at the storage position 120, the computing device 20 sends a notification of the inconsistency. This provides for persons loading the vehicle 110 to address the issue prior to loading additional cargo 100. In other examples, the computing device 20 monitors the loading the cargo 100 onto the aircraft 110. At the end of the loading process, the computing device 20 prepares a report indicating the detected positions of the cargo 100. The report also includes any inconsistencies between the detected storage positions and the corresponding positions indicated on the loading instruction report.

In some examples, the identification of the cargo 100 is based on information that is maintained on the pallet base 104. Examples include but are not limited to an RFID tag 101 and/or optical code 103 that is attached to the pallet base 104. In some examples, there is no identifying information on the pallet base 104. This can occur when identification is inadvertently left off the pallet base 104 or the wrong identifying information is attached. This can also occur when the identification on the pallet base 104 is damaged during handling such as an optical code 103 that is scratched off or an RFID tag 101 that is broken and unable to convey information. In some examples, the identification of the cargo 100 is based on identifying one or more of the packages 105 stored on the pallet base 104. As illustrated in Figure 2, the packages 105 include identifiers, such as an RFID tag 101 or an optical code 103.

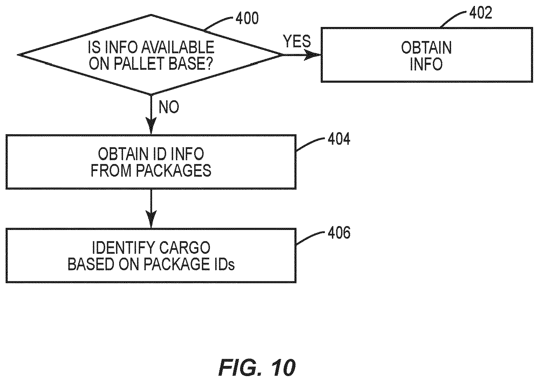

Figure 10 illustrates a method of identifying the cargo 100 based on the identifiers on the packages 105. The process initially determines whether there is identification information available on the pallet base 104 (block 400). When information is available, the information is captured and the cargo 100 is identified based on the information (block 402).

When the information is not available from the pallet base 104, information is obtained from one or more of the packages 105 on the pallet base 104 (block 404). For example, one or more of the packages 105 include an identifier such as an RFID tag 101 or optical code 103. The cargo 100 is then identified based on the one or more identifiers (block 406).

In some examples, the information from the packages 105 identifies the cargo 100. For example, an RFID tag 101 includes the name of the cargo 100. In some examples, the identification from the packages 105 are compared to the data in the loading instruction report. The computing device 20 then identifies the cargo 100 based on the corresponding data from the report. For example, the package identifier identifies the package as furniture model number 1234 from ABC Corp. The computing device 20 determines that this package 105 is part of a particular cargo 100.

In some examples, a confidence value is assigned to the cargo identification. The confidence value is the confidence that the cargo 100 was correctly identified. In some examples, this confidence value is stored with the identification and one or more images. In some examples, the confidence value is stored with the loading instruction report.

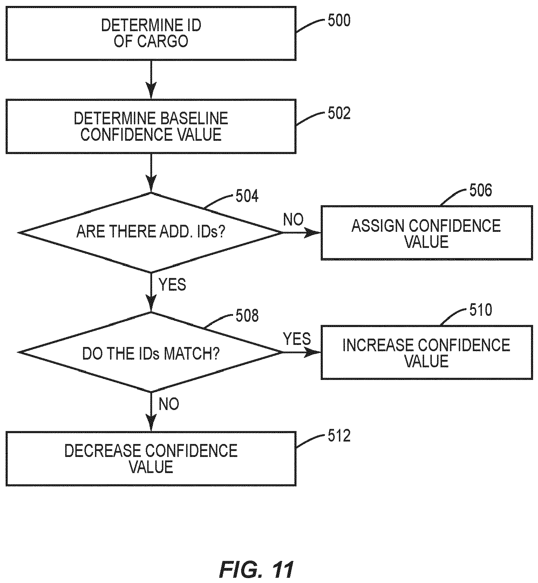

Figure 11 illustrates a method of determining a confidence value for cargo 100. Initially, the cargo 100 is identified based on a sensed aspect (block 500). For example, the cargo 100 is identified based on one of the RFID, optical code 103, or storage position 120. A baseline confidence value is determined for the identification (block 502). In some examples, the baseline confidence value is the same for each type of identification. In other examples, the baseline confidence value is based on the manner of identification. In some examples, the baseline uses the hierarchy. In some examples, a highest baseline (e.g., 80%) is assigned for an RFID identification, an intermediate baseline (e.g., 70%) based on a storage position 120, and a lowest value (e.g., 60%) based on an optical code 103.

The method then determines if there are other identifications based on other detected aspects (block 504). If there are no other identifications, the initial baseline confidence is assigned to the identification (block 506). If there is another identification, the computing device 20 determines if the different identifications match (block 508). If the identifications match, then the confidence value assigned is increased (block 510). If the identifications do not match, the confidence value is decreased (block 512). For example, an initial confidence value of 75% is assigned for a first identification based on a storage position 120. A second identification is also made for the cargo 100 based on RFID. If the identifications match, the confidence value for the identification is raised to 90%. If the identifications are different, the confidence value for the cargo is lowered to 60%. The confidence value for an identification can be increased or decreased for each sensed identification.

In some examples, the vehicle 110 is not able to leave the loading area until a review of the actual loading is compared with the loading instruction report. The review ensures that the cargo 100 is loaded at the proper locations within the interior space 112 in accordance with the loading instruction report. When the placement is consistent with the loading instruction report, the loading process is finalized and the vehicle 110 can leave the loading area and begin travel. Conversely, the vehicle 110 is prevented from leaving when there is an inconsistency between the placement of the cargo 100 and the loading instruction report. In one example in which the vehicle 110 is an aircraft, the placement of the cargo 100 is carefully controlled to distribute the weight. Placement contrary to the loading instruction report could cause a change in the distribution and thus be an issue during a flight.

The descriptions above have described the system 15 for use in loading and unloading a vehicle 110, such as an aircraft. The system 15 is also applicable for use in other contexts. Some examples include but are not limited to use within a manufacturing facility where the packages 105 are manufactured and/or packaged, a warehouse where the cargo 100 is stored, and a transportation environment such as at an airport, dock, warehouse wherein the goods are moved prior to being loaded onto a vehicle.

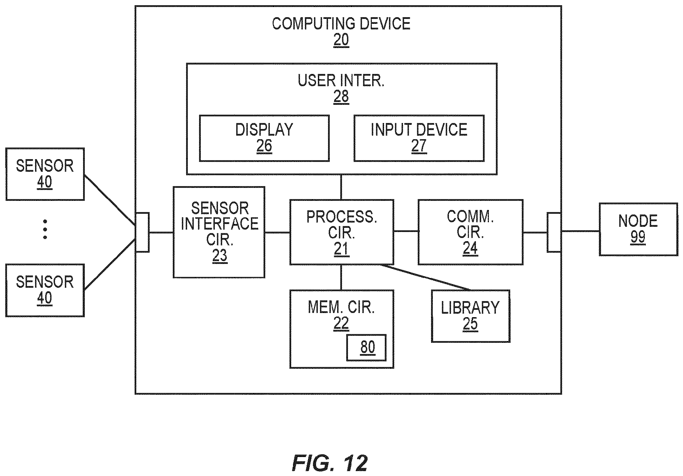

Figure 12 schematically illustrates a computing device 20 configured to identify the cargo 100. The computing device 20 includes processing circuitry 21, memory circuitry 22, sensor interface circuitry 23, and communications circuitry 24.

The processing circuitry 21 controls overall operation of the system 15 according to program instructions 80 stored in the memory circuitry 22. The processing circuitry 21 includes one or more circuits, microcontrollers, microprocessors, hardware, or a combination thereof. The processing circuitry 21 can include various amounts of computing power to provide for the needed functionality.

Memory circuitry 22 includes a non-transitory computer readable storage medium storing program instructions, such as a computer program product, that configures the processing circuitry 21 to implement one or more of the techniques discussed herein. Memory circuitry 22 can include various memory devices such as, for example, read-only memory, and flash memory. Memory circuitry 22 can be a separate component as illustrated in Figure 12 or can be incorporated with the processing circuitry 21. Alternatively, the processing circuitry 21 can omit the memory circuitry 22, e.g., according to at least some examples in which the processing circuitry 21 is dedicated and non-programmable.

In some examples, the memory circuitry 22 is configured to store information about the cargo 100. In some examples, this includes the loading instruction report. The same and/or additional information related to the cargo 100 can further be stored, including but not limited to the shape, size weight, contents, particular shipping instructions, origination point, and destination point, and storage position.

The sensor interface circuitry 23 provides for receiving signals from the sensors 40. The sensor interface circuitry 23 can provide for one-way communications from the sensors 40 or two-way communications that are both to and from the sensors 40. The communications can be through wireless and/or wired means. In some examples, the communications occur through a communication system that is already established on the vehicle 110.

The communication circuitry 24 provides for communications to and from the computing device 20. The communications can include communications with other circuitry on the vehicle 110 (e.g., vehicle control system) and/or communications with a remote node 99. Communications circuitry 24 provides for sending and receiving data with one or more remote nodes 99.

A user interface 28 provides for a user to access data about the cargo 100. The user interface 28 can include one or more input devices 27 such as but not limited to a keypad, touchpad, roller ball, and joystick. The user interface 28 can also include one or more displays 26 for displaying information to regarding the cargo 100 and/or for an operator to enter commands to the processing circuitry 21.

In some examples, the computing device 20 operates autonomously to process the signals and identify the cargo 100. The final identification of the cargo 100 can be output to one or more remote nodes. This autonomous ability minimizes and/or eliminates operator intervention which could slow the process and/or create errors.

In some examples, the entire system 15 is integrated with the vehicle 110. The computing device 20 can be a stand-alone device that provides just for the computation of the cargo 100. In some examples, the computing device 20 performs one or more additional functions. For example, the computing device 20 can be part of the flight control computer that oversees the operation of the vehicle 110. In other examples, the computing device 20 is part of a loading system that comprises sensors 40 located throughout the vehicle 110 and is used for monitoring passengers and/or cargo 100.

In yet other examples, the computing device 20 is located remotely from the vehicle 110. Some examples include the computing device 20 being a remote node 99 that receives the images from the sensors 40 and processes the data to determine the final identification.

Additionally or alternatively, the computing device 20 is configured to access information about the cargo 100 that is stored remotely at one or more remote nodes 99. In some examples, the computing device 20 accesses a node 99 to obtain the loading instruction report.

In some examples, the computing device 20 receives the signals from the sensors 40. The computing device 20 is configured to use a combination of machine learned perception, photogrammetry, and automated software modules to automatically process and deliver data in real time. The computing device 20 is configured to process the data in a timely manner which can range from minutes to hours depending upon the amount of data and the needed parameters of the job.

Further examples are presented in the following clauses.

Clause 1. A system to identify cargo (100), the system comprising: a first sensor (40) configured to sense a first aspect of the cargo (100); a second sensor (40) configured to sense a different second aspect of the cargo (100); a computing device (20) configured to: determine a first initial identification of the cargo (100) based on signals from the first sensor (40); determine a second initial identification of the cargo (100) based on signals from the second sensor (40); identify the cargo (100) in a first manner when the first initial identification matches the second initial identification; and identify the cargo (100) in a second manner when the first initial identification is different than the second initial identification.

Clause 2. The system of Clause 1, wherein the computing device (20) is further configured to pair an image of the cargo (100) with a final identification.

Clause 3. The system of Clause 1 or 2, wherein the first manner comprises determining a final identification of the cargo (100) as the first initial identification.

Clause 4. The system of any of Clauses 1 to 3, wherein the first sensor (40), the second sensor (40), and the computing device (20) are mounted on an aircraft.

The present examples are to be considered in all respects as illustrative and not restrictive, and all changes coming within the meaning of the appended claims are intended to be embraced therein.

## Claims

1. A system to identify cargo (100), the system comprising:
one or more sensors (40) configured to sense different aspects of the cargo (100) and to transmit signals corresponding to the aspects; and
a computing device (20) that receives the signals from the one or more sensors (40), the computing device (20) configured to:
determine initial identifications of the cargo (100) based on the aspects that are sensed by the one or more sensors (40);
when the initial identifications match, determine that a final identification of the cargo (100) is equal to the initial identifications; and
when the initial identifications do not match, determine the final identification based on a hierarchy of the initial identifications.

2. The system of claim 1, wherein the computing device (20) is further configured to pair an image of the cargo (100) with the final identification.

3. The system of claim 2, wherein the image of the cargo is one or more 3D scans of the cargo (100).

4. The system of any preceding claim, wherein:
one of the sensors (40) comprises a RFID reader configured to read a predetermined identification that is stored in an RFID tag (101) that is mounted on the cargo (100) and one of the aspects comprises the predetermined identification; and/or
one of the sensors (40) comprises an optical reader configured to read an optical code (103) that is on the cargo (100) and one of the aspects comprises the optical code (103).

5. The system of any preceding claim, wherein the computing device (20) is further configured to:
determine a confidence value of the final identification of the cargo (100) and pair the confidence value with the final identification.

6. The system of claim 5, wherein the computing device (20) is further configured to:
determine the confidence value based on a first one of the initial identifications of the cargo (100); and
determine that the first one of the initial identifications matches a second one of the initial identifications and increase the confidence value.

7. The system of claim 5 or 6, wherein the computing device (20) is further configured to determine that the first one of the initial identifications of the cargo (100) is different than a third one of the initial identifications and decrease the confidence value.

8. The system of any preceding claim, wherein one of the sensors (40) comprises a camera configured to capture a storage position of the cargo (100) and one of the aspects is the storage position of the cargo (100).

9. The system of any preceding claim, wherein the computing device (20) is further configured to:
determine a position of cargo (100) within an alignment area (114);
determine a lane (115) in which the cargo (100) is moved based on the position within the alignment area (114); and
determine a storage position (120) based on the lane (115).

10. The system of any preceding claim, wherein the computing device (20) is configured to:
determine a storage position of the cargo (100) based on an image of the cargo (100);
determine a description for the storage position from a loading instructions report; and
determine one of the initial identifications of the cargo (100) as the description.

11. The system of any preceding claim, wherein the computing device (20) is configured to:
determine a first identification of the cargo (100) based on an image of the cargo (100) captured by a camera;
determine a second identification of the cargo based on an optical code on the cargo (100); and
determine that the first identification and the second identification match and that the final identification is the first identification and the second identification.

12. A vehicle (110), optionally an aircraft, comprising the system of any preceding claim, wherein the sensors (40) and the computing device (20) are mounted on the vehicle (110).

13. A method of identifying cargo (100), the method comprising:
determining initial identifications of the cargo (100) based on different aspects that are sensed by one or more sensors (40);
comparing the initial identifications;
determining that a final identification of the cargo (100) is the same as the initial identifications when the initial identifications match; and
determining a confidence value of the final identification.

14. The method of claim 13, further comprising capturing an image of the cargo (100) and pairing the image with the final identification.

15. The method of claim 13 or 14, wherein determining the confidence value comprises:
determining a baseline value based on a first one of the initial identifications; and
increasing the baseline value based on a second one of the initial identifications matching the first one of the initial identifications.
